# EUROPEAN PATENT APPLICATION

(11) **EP 4 607 395 A1**
(43) Date of publication of application: **27.08.2025**
(21) Application number: 25159370.3
(22) Date of filing: 21.02.2025
(51) Int. Cl.: G06F 30/15, G06F 30/27, G06F 119/10

(54) **METHOD, APPARATUS, STORAGE MEDIUM AND COMPUTER PROGRAM PRODUCT FOR NOISE PREDICTION OF VEHICLE MODEL**

(30) Priority: 23.02.2024 CN 202410204790
(71) Applicant: Volvo Car Corporation, 405 31 Göteborg (SE)
(72) Inventor: WANG, Enqun, Shanghai, 201821 (CN); LIN, Wei, Shanghai, 201821 (CN); REN, Yonglian, Shanghai, 201821 (CN); YANG, Hongying, Shanghai, 201821 (CN)
(74) Representative: Maiwald GmbH

(57) **Abstract**

The present disclosure provides a method, an apparatus, a storage medium and a computer program product for noise prediction of a vehicle model. There is provided a method for noise prediction of a vehicle model, which includes: training a noise prediction model based on historical test data of the vehicle and corresponding historical road noise data; obtaining predictive road noise data by inputting test data of the vehicle model into a trained noise prediction model; and obtaining contributions of various parameters in the test data to the predictive road noise data by analyzing the predictive road noise data with an SHAP explaining module.

## Description

### TECHNICAL FIELD

The present disclosure relates to vehicle field, and more specifically, to a method, an apparatus, a storage medium and a computer program product for noise prediction of a vehicle model.

### BACKGROUND

While an automobile is being driven, road noise constitutes a significant part of user experience. With the continual development of automobile from internal combustion engine automobile to electric automobile, since the road noise is no longer covered by the engine's noise, higher requirements are put forward for the road noise. The problem of vehicle's noise will greatly affect the user experience, and affect the vehicle's service life and the performance during normal operation.

With the increasing complexity of automobile design and the increasing importance of noise control, Noise, Vibration and Harshness (NVH) test for vehicle has become a significant part of vehicle development. Since a vehicle is a complicated system, for which a plurality of parameters associated with the vehicle and its driving environment will cause influence on the problem of the vehicle's road noise in a nonlinear manner, it is usually required to carry out NVH road noise test relying on physical test. For example, it is possible for an NVH road noise test to arrange a large number of sensors in the vehicle and/or the testing environment where the vehicle is located to acquire noise data, obtain actual noise data by carrying out actual tests on the vehicle in the testing environment, and analyze and adjust relevant parameters of the vehicle based on the actually obtained noise data, so as to achieve the goal of reducing noise.

Such test usually requires a plurality of iterations and adjustments to achieve the goal of reducing noise, making the vehicle development to be both time-consuming and expensive, and leading to inefficiency in the test. In addition, conventional testing methods may not be able to timely learn the influence by the alterations of design of vehicle model on noise level according to the alterations in the design.

### SUMMARY

At least in order to solve the above problems, the present disclosure provides a data-driven method and apparatus of testing noise for a vehicle model.

According to a first aspect of the present disclosure, there is provided a computer-implemented method for noise prediction of a vehicle model, which includes: obtaining predictive road noise data by inputting test data of the vehicle model into a trained noise prediction model; and obtaining contributions of various parameters in the test data to the predictive road noise data by analyzing the predictive road noise data with an SHAP explaining module.

According to an embodiment of the present disclosure, the trained noise prediction model is trained based on historical test data of the vehicle and corresponding historical road noise data; the historical test data includes at least one of historical testing environment parameters, historical tire design parameters, or historical vehicle attribute parameters; and the test data includes at least one of testing environment parameters of the vehicle model to be predicted, tire design parameters of the vehicle model to be predicted, or vehicle attribute parameters of the vehicle model to be predicted.

According to an embodiment of the present disclosure, the testing environment parameters include parameters related to at least one of road surface condition, ambient temperature, ambient humidity, or vehicle speed.

According to an embodiment of the present disclosure, the tire design parameters include parameters related to at least one of pattern, material, size, or inflation pressure of the tire.

According to an embodiment of the present disclosure, the vehicle attribute parameters include parameters related to at least of suspension system, chassis, or sound insulation of the vehicle.

According to an embodiment of the present disclosure, the method further includes retraining the trained noise prediction model based on actual road noise data of the vehicle and corresponding test data.

According to an embodiment of the present disclosure, the method further includes adjusting the test data of the vehicle model based on an explanation result of the SHAP explaining module.

According to the embodiment of the present disclosure, adjusting the test data of the vehicle model includes at least one of: adjusting the value of the test data of the vehicle model; or adjusting the type of the test data to be taken by the trained noise prediction model.

According to a second aspect of the present disclosure, there is provided an apparatus for noise prediction of a vehicle model, which includes: a testing module, configured to obtain predictive road noise data by inputting test data of the vehicle model into a trained noise prediction model; and a model explaining module, configured to obtain contributions of various parameters in the test data to the predictive road noise data by analyzing the predictive road noise data with an SHAP explaining module.

According to a third aspect of the present disclosure, there is provided an apparatus for noise prediction of a vehicle model, including: a memory, having stored computer instructions thereon; and a processor, in which the instructions, when executed by the processor, cause the processor to perform the method according to the first aspect of the present disclosure.

According to a fourth aspect of the present disclosure, there is provided a non-transitory computer-readable storage medium storing instructions that cause a processor to perform the method according to the first aspect of the present disclosure.

According to a fifth aspect of the present disclosure, there is provided a computer program product including instructions that cause a processor to perform the method according to the first aspect of the present disclosure.

With the method and apparatus provided by the present disclosure, road noise level can be predicted more accurately and more effectively, and the number of physical tests required for road noise/road surface noise can be reduced, so that a digital test is allowed to be carried out at an early stage, which simplifies the development process.

### BRIEF DESCRIPTION OF DRAWINGS

These and/or other aspects and advantages of the present disclosure will become clearer and easier to understand from the following detailed description of the embodiments of the present disclosure, taken in conjunction with the accompanying drawings, in which:
Fig. 1 shows a schematic diagram of a system for noise prediction of a vehicle model according to an embodiment of the present disclosure;
Fig. 2 shows a flowchart of a method for noise prediction of a vehicle model according to an embodiment of the present disclosure;
Fig. 3 shows a view and a sectional view for illustrating size of the tire;
Fig. 4 shows a frequency characteristic diagram of the tire resulted from carrying out a frequency/peak test on wheel based on a tire force transfer vertical model;
Fig. 5 shows a schematic diagram of a method for obtaining a trained noise prediction model according to an embodiment of the present disclosure;
Fig. 6 shows a schematic diagram of a method for obtaining predictive road noise data according to an embodiment of the present disclosure;
Fig. 7 shows a schematic diagram of an interface for real-time noise prediction for developing a new vehicle model according to an embodiment of the present disclosure;
Figs. 8A and 8B show schematic diagrams of SHAP explanation for analyzing contributions of various parameters in test data to predictive road noise data according to an embodiment of the present disclosure;
Fig. 9 shows a schematic diagram of an apparatus for noise prediction of a vehicle model according to an embodiment of the present disclosure;
Fig. 10 shows a schematic diagram of an apparatus for noise prediction of a vehicle model according to an embodiment of the present disclosure.

It should be understood that these accompanying drawings are used to provide a further understanding of the embodiments of the present disclosure and constitute a part of the specification, and together with the embodiments, serve to explain the present disclosure, but do not constitute a limitation of the present disclosure. In addition, in the accompanying drawings, like reference numerals usually represent like parts or steps.

### DETAILED DESCRIPTION

In order to better set forth the technical solution of the present disclosure, a detailed illustration will be further made to the present disclosure in conjunction with the accompanying drawings and the detailed description. It should be understood that based on the embodiments described in the present disclosure, all the other embodiments obtained by those skilled in the art without paying creative labour should fall within the protection scope of the present disclosure, and the embodiments described herein are only a part of the embodiments, not all the embodiments of the present disclosure. Such embodiments are merely illustrative and exemplary, and thus should not be interpreted as limiting the scope of the present disclosure.

The vehicle's noise propagates from the tires in contact with the road surface into the compartment mainly through both the air and the structure of the vehicle itself, and therefore this can involve a plurality of complicated sources, for example, but not limited to the noise caused by the vehicle's power system (such as engine, transmission system and air intake and exhaust system), the imbalance in wheels, or the like, and the ambient noise, and so on. Since such excitation can be passed into the vehicle through both the structure of the vehicle itself and the air, the structure for transferring the noise is also very complicated. Therefore, it is very difficult to model the road noise felt by the user inside the vehicle to establish an association among various factors and the road noise.

Conventional NVH noise testing methods include simulating NVH noise by establishing a simulation model through Computer Aided Engineering (CAE), and directly obtaining NVH noise through actual physical tests, so as to obtain the influence by the performance of tires or hubs on the NVH noise of the whole vehicle. However, such conventional NVH noise testing method cannot be realized in an early development stage (especially in an early concept stage). Therefore, in the early development stage, an NVH noise test is carried out usually through empirical decisions made by engineers, and thus the accuracy is not high.

In order to solve the problems in conventional NVH noise tests, the present disclosure employs a data-driven method and apparatus for NVH noise prediction. Specifically, in the present disclosure, machine learning is utilized to train a noise prediction model based on historical data of the vehicle and corresponding historical road noise data, the trained model is utilized to carry out a road noise prediction, and then an SHAP explaining module is utilized to analyze the result of the road noise prediction, so that the development of a new vehicle model is carried out digitally to improve the NVH road noise.

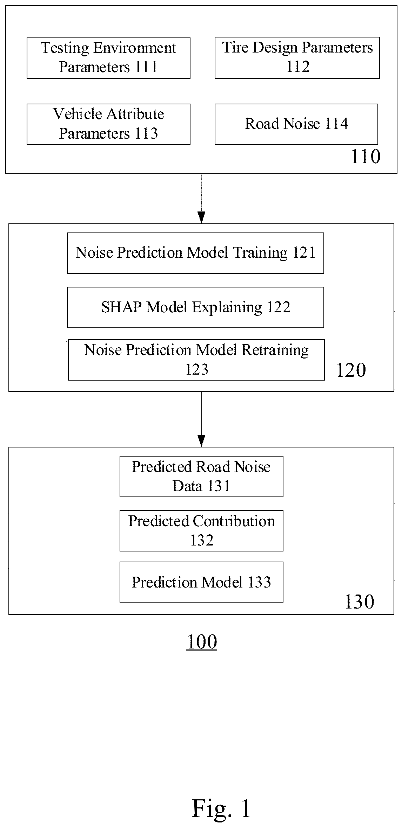

Fig. 1 shows a schematic diagram of a system for noise prediction of a vehicle model according to an embodiment of the present disclosure. As shown in Fig. 1, system 100 may include an input 110, a system core 120 and an output 130.

Specifically, the input 110 may include historical data for training and test parameters for testing which are input, including testing environment parameters 111, tire design parameters 112, vehicle attribute parameters 113 and road noise 114. The testing environment parameters 111 may include parameters associated with the testing environment, including but not limited to parameters indicating at least one of road surface condition, ambient temperature, ambient humidity, or vehicle speed. The tire design parameters 112 may include parameters associated with the tire design of the vehicle, including but not limited to parameters indicating at least one of pattern, material, size, or inflation pressure of the wheel, which may cause influence on the road noise level. The vehicle attribute parameters 113 may include parameters related to specific attributes of the vehicle, including but not limited to parameters indicating at least one of suspension system, chassis, or sound insulation of the vehicle, which may cause influence on inherent noise. The road noise 114 may include real road noise test data from actual tests of the vehicle, thus providing a basis for the training and retraining of the noise prediction model.

Specifically, it can be found through experimental tests that the three types of parameters, testing environment parameters 111, tire design parameters 112 and vehicle attribute parameters 113, will have great influence on corresponding road noise.

For example, Table 1 below shows actually measured results of road noise under different testing environments.

**Table 1**

| | OA 20-2000 Hz | Drumming 22-69 Hz | Rumble 69-164 Hz | Cavity 164-229 Hz | Rough Tire Noise 229-599 Hz | Presence 599-2000 Hz |
|---|---|---|---|---|---|---|
| GE road surface 50 km/h | 65.4 | 58.3 | 60.7 | 59.8 | 56.9 | 52.5 |
| GE road surface 80 km/h | 70 | 59.2 | 65.7 | 63.9 | 63.1 | 60.1 |
| SA road surface 80 km/h | 60.1 | 48.6 | 58.6 | 54.1 | 54 | 53 |

OA represents value of overall noise in full spectral band, Drumming represents drumming-like noise, Rumble represents rumbling, Cavity represents cavity noise, Rough Tire Noise represents high-frequency rumbling, Presence represents tread pattern noise (similar to rustling sound); GE (Glen Eagle) road surface represents rough granular asphalt road surface, and SA (Smooth Asphalt) road surface represents smooth granular asphalt road surface.

For example, as shown in the table above, for identical conditions of GE road surface, the actually measured Rumble noises in the frequency range of 69-164 Hz obtained at the vehicle speed of 50 km/h and 80 km/h are 60.7dB and 65.7 dB, respectively; whereas for identical vehicle speed of 80 km/h, the actually measured Rumble noises in the frequency range of 69-164 Hz obtained under the conditions of GE road surface and SA road surface are 65.7 dB and 58.6 dB, respectively.

The change in tire design parameters also has great influence on the actually measured road noise. For example, in the case that the tire pressure changes from 2.5 bar to 2.8 bar, the actually measured road noise increases by 0.3 dB.

The vehicle attribute parameters also have great influence on the road noise due to the involvement of main parameters of tires and hubs.

Therefore, while the noise prediction model is being established, the three types of parameters, testing environment parameters 111, tire design parameters 112 and vehicle attribute parameters 113, should be comprehensively considered to simulate the road noise as precisely as possible.

The system core 120 can be used to model and explain noise prediction, including a noise prediction model training module 121, an SHAP model explaining module 122, and a noise prediction model retraining module 123. The noise prediction model training module 121 may train a machine learning model according to historical data for predicting NVH noise level of a new vehicle model. The SHAP model explaining module 122 may analyze a result of noise prediction resulted from inputting the test data into the trained noise prediction model, so as to obtain contributions of various parameters in the test data to the result of noise prediction, thus helping develop the new vehicle model. The noise prediction model retraining module 123 may improve and update the noise prediction model after the accomplishment of the training of the model. For example, the real road noise test data from a newly launched vehicle model may be used by the noise prediction model retraining module 123 to retrain the trained noise prediction model.

The output 130 may include predictive road noise data 131, prediction contribution 132 and prediction model 133. The predictive road noise data 131, which can be an output result of prediction resulted from inputting the test data into the trained noise prediction model, helps vehicle engineers learn the expected noise level, so as to optimize and evaluate the vehicle design. The prediction contribution 132, which is the contributions of various parameters in the test data to the result of noise prediction, can be obtained by explaining the result of noise prediction with an SHAP model, so that the engineers can be helped in understanding why such a result of prediction was made and in learning the influence by various test parameters on the road noise level. The prediction model 133 may be either a noise prediction model trained utilizing machine learning, or an updated noise prediction model resulted from adjustment such as retraining. For example, by retraining the noise prediction model with the actual road noise data of the newly launched vehicle, the noise prediction model can be ensured to maintain the relevance and accuracy for a long time.

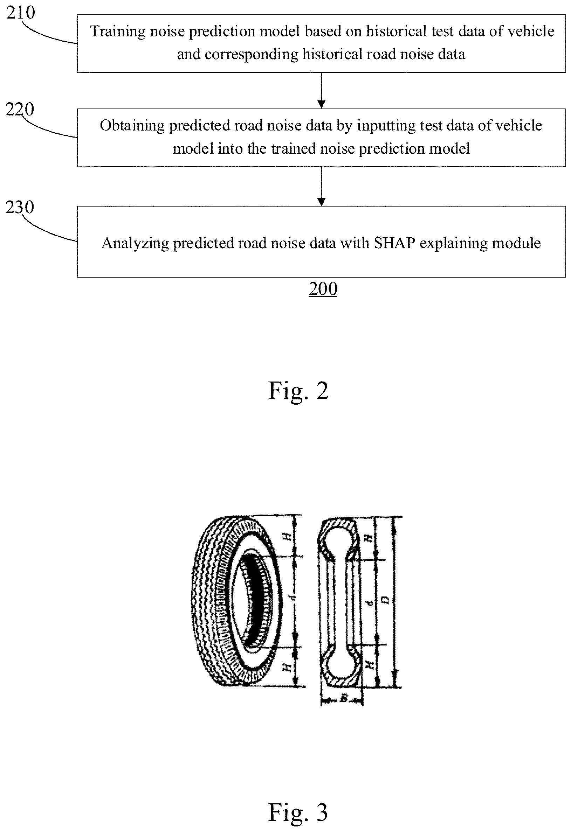

Fig. 2 shows a flowchart of a method 200 for noise prediction of a vehicle model according to an embodiment of the present disclosure.

As shown in Fig. 2, at 210, a noise prediction model may be trained based on historical test data of the vehicle and corresponding historical road noise data.

The noise prediction model may be trained based on methods such as machine learning, and the machine learning training methods employed in the present disclosure may include, for example, Gradient Boosting Decision Tree.

The historical test data of the vehicle, which may refer to the data obtained by feature engineering based on the historical test-related data from actual tests of the vehicle, can be either the data directly obtained by measuring on an actual vehicle and its actual driving environment with sensors or the like, or the data indirectly obtained by feature extraction of the data from sensors.

For example, the testing environment parameters 111 as shown in Fig. 1 may include road surface condition, ambient temperature, ambient humidity, vehicle speed, etc., which can be obtained by directly measuring with the sensors installed in the driving environment of the vehicle.

For example, the tire design parameters 112 as shown in Fig. 1 may include data such as size and pressure of the tire, as listed in Table 2 below and described with reference to Fig. 3, which can be obtained by directly measuring the tires with sensors.

**Table 2 Tire design parameters**

| | PARAMETER | MEANING |
|---|---|---|
| 1 | Tire_Diameter | The diameter of tire d |
| 2 | Tire_Width_F | The width of front tire B |
| 3 | Tire_Width_R | The width of rear tire B |
| 4 | Tire_Ratio_F | The ratio of the thickness to the width of front tire H/B*100% |
| 5 | Tire_Ratio_R | The ratio of the thickness to the width of rear tire H/B*100% |
| 6 | Tire_Cold_Pressure_F | The pressure of front tire at room temperature (e.g., 20°C) |
| 7 | Tire_Cold_Pressure_R | The pressure of rear tire at room temperature (e.g., 20°C) |

For example, the vehicle attribute parameters 113 as shown in Fig. 1 may include parameters associated with attributes of various parts of the vehicle, as shown in Table 3 below.

**Table 3 Vehicle Attribute Parameters**

| | PARAMETER | MEANING |
|---|---|---|
| 1 | Tire_FT_1st_Vertical_ Mode_Frequency_F | The frequency characteristics of the tire resulting from frequency/peak test on front wheel based on tire force transfer vertical model (see Fig. 4) |
| 2 | Tire_FT_1st_Vertical_ Mode_Frequency_R | The frequency characteristics of the tire resulting from frequency/peak test on rear wheel based on tire force transfer vertical model (see Fig. 4) |
| 3 | Tire_FT_1st_Cavity_M ode_Frequency_F | The frequency characteristics of the tire resulting from frequency/peak test on front wheels based on tire force transfer cavity model (see Fig. 4) |
| 4 | Tire_FT_1st_Cavity_M ode_Frequency_R | The frequency characteristics of the tire resulting from frequency/peak test on rear wheel based on tire force transfer cavity model (see Fig. 4) |
| 5 | Tire_Vertical_Peak_F | The peak characteristics of the tire resulting from frequency/peak test on front wheel based on tire force transfer vertical model (see Fig. 4) |
| 6 | Tire_Vertical_Peak_R | The peak characteristics of the tire resulting from frequency/peak test on rear wheel based on tire force transfer vertical model (see Fig. 4) |
| 7 | Tire_Cavity_Peak_F | The peak characteristics of the tire resulting from frequency/peak test on front wheel based on tire force transfer cavity model (see Fig. 4) |
| 8 | Tire_Cavity_Peak_R | The peak characteristics of the tire resulting from frequency/peak test on rear wheel based on tire force transfer cavity model (see Fig. 4) |
| 9 | Wheel_Weight(Kg)_F | The weight of front rim |
| 10 | Wheel_Weight(Kg)_R | The weight of rear rim |
| 11 | Single_Wheel_Lateral_ Stiffness(KN/mm)_F | The lateral stiffness of front rim |
| 12 | Single_Wheel_Lateral_ Stiffness(KN/mm)_R | The lateral stiffness of rear rim |

As a non-limiting example, as shown in Table 3, the parameters 1-8 and 11-12 can be the data indirectly obtained by feature extraction of the data from sensors, and the parameters 9-10 can be the data directly obtained by measuring on an actual vehicle and its actual driving environment with sensors or the like.

The historical road noise data of the vehicle may refer to NVH road noise obtained by measuring on an actual vehicle. It should be understood that the actual vehicle here can be a vehicle associated with the vehicle model to be predicted, such as an actual test vehicle of the vehicle model under development, or an actual test vehicle belonging to the vehicle model of the previous generation, and so on.

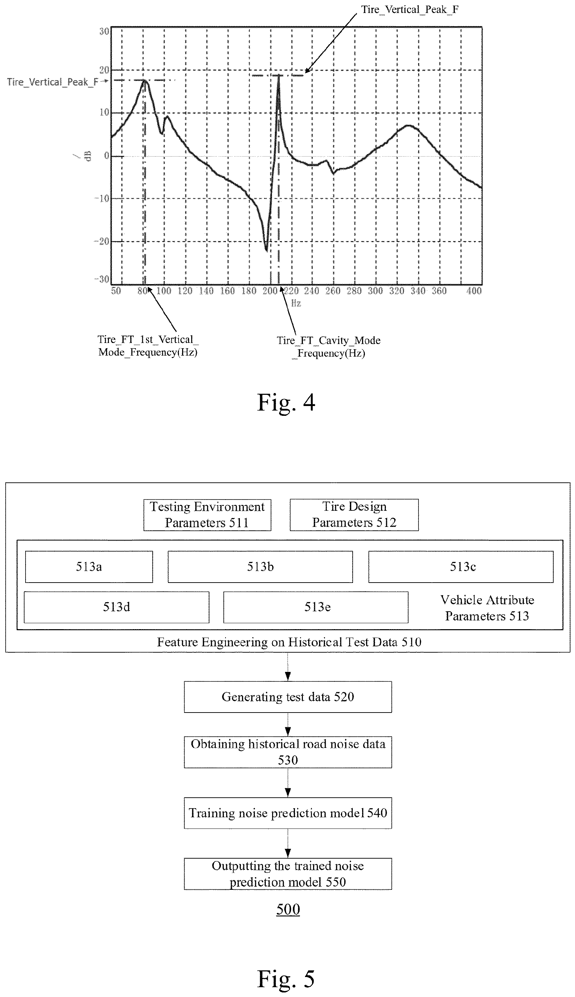

Referring to Fig. 5, a schematic diagram of a method 500 for obtaining a trained noise prediction model according to an embodiment of the present disclosure is shown. As shown in Fig. 5, the method 500 may include feature engineering on historical test data 510, generating test data based on the feature engineering 520, obtaining historical road noise data 530, training a noise prediction model 540, and outputting the trained noise prediction model 550. The feature engineering on historical test data 510 can be a process of processing the historical test data to extract features.

Specifically, the feature engineering on historical test data 510 can obtain testing environment parameters 511, tire design parameters 512 and vehicle attribute parameters 513. It should be understood that the historical testing environment parameters 511, tire design parameters 512 and vehicle attribute parameters 513 either can be obtained through actual historical measurement of the vehicle, or can be parameters extracted by modeling based on the data resulted from the actual historical measurement. As a non-limiting example, in order to obtain the vehicle attribute parameters 513, a dynamic stiffness testing module 513a, a frequency-response-function-based first lateral wheel resonance model frequency testing module 513b, a frequency-response-function-based first lateral wheel anti-resonance model frequency testing module 513c, a tire force transfer first vertical model frequency/peak testing module 513d, a tire force transfer cavity model frequency/peak testing module 513e and the like can be utilized. The dynamic stiffness testing module 513a may be configured to obtain the dynamic stiffness of the vehicle structure. The frequency-response-function-based first lateral wheel resonance model frequency testing module 513b may be configured to obtain the frequency characteristics of the wheel by carrying out frequency tests on a lateral wheel resonance model based on a frequency response function. The frequency-response-function-based first lateral wheel anti-resonance model frequency testing module 515c may be configured to obtain the frequency characteristics of the wheel by carrying out frequency tests on a lateral wheel anti-resonance model based on a frequency response function. The tire force transfer first vertical model frequency/peak testing module 513d may be configured to obtain the frequency/peak characteristics of the tire by carrying out frequency/peak tests on a tire force transfer vertical model. The tire force transfer cavity model frequency/peak testing module 513e may be configured to obtain the frequency/peak characteristics of the tire by carrying out frequency/peak tests on a tire force transfer cavity model. It should be understood that in the present disclosure, a wheel and a tire are different concepts, because a wheel includes components such as a hub in addition to a tire.

It should be understood that step 210 as shown in Fig. 2 is not necessarily included in the method 200. For example, a pre-trained model can be provided, so that step 210 can be omitted.

Referring back to Fig. 2, at 220, predictive road noise data may be obtained by inputting the test data of the vehicle model into the trained noise prediction model. The test data of the vehicle model may refer to relevant parameters of the vehicle model to be predicted. The predictive road noise data may refer to the road noise data obtained from utilizing the road noise prediction model on the vehicle model to be predicted.

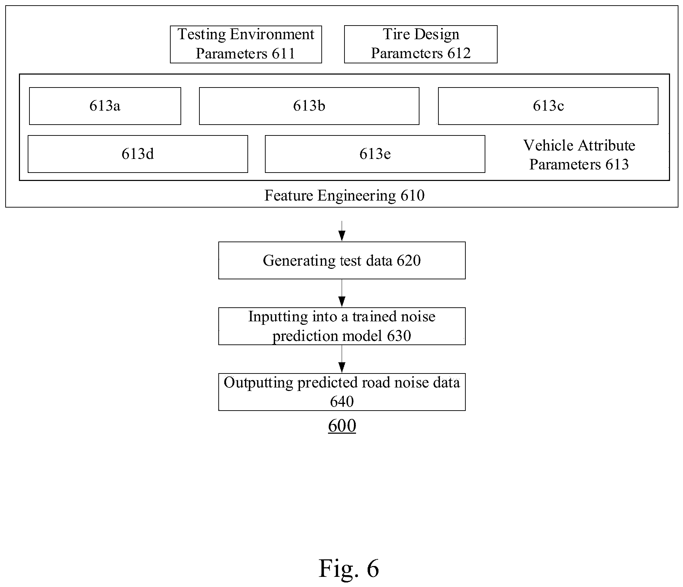

Referring to Fig. 6, a schematic diagram of a method 600 for obtaining predictive road noise data according to an embodiment of the present disclosure is shown. As shown in Fig. 6, the method 600 may include feature engineering on test data of a vehicle model to be predicted 610, generating test data based on the feature engineering 620, inputting the test data into a trained noise prediction model 630, and outputting predictive road noise data 640. The feature engineering on the test data of the vehicle model to be predicted 610 can obtain testing environment parameters 611, tire design parameters 612 and vehicle attribute parameters 613, such as a dynamic stiffness testing module 613a, a frequency-response-function-based first lateral wheel resonance model frequency testing module 613b, a frequency-response-function-based first lateral wheel anti-resonance model frequency testing module 613c, a tire force transfer first vertical model frequency/peak testing module 613d, a tire force transfer cavity model frequency/peak testing module 613e and the like, which is similar to the feature engineering 510 as previously described, and will not be detailed here.

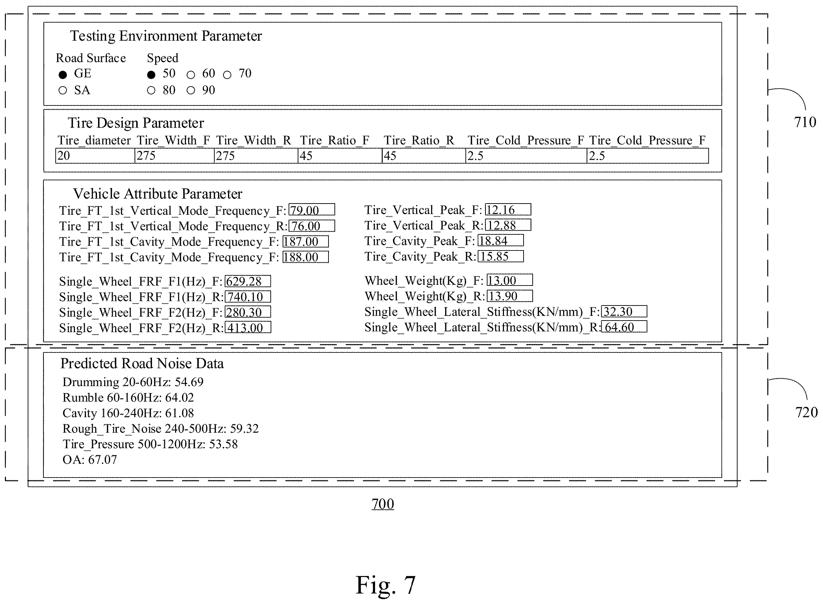

Referring to Fig. 7, a schematic diagram of an interface 700 for real-time noise prediction for developing a new vehicle model according to an embodiment of the present disclosure is shown. As shown in Fig. 7, various test parameters 710 may be input in the interface 700, and a noise prediction result 720 may be output based on a trained noise prediction model. As shown in Fig. 7, the noise prediction result 720 may include noise prediction results in different frequency bands, in which the noises in different frequency bands may correspond to different noise-related characteristics, thus providing more refined results for engineers' reference. For example, Fig. 7 shows classic Drumming noise of 20-60 Hz, Rumble noise of 60-160 Hz, Cavity noise of 160-240 Hz, and so on.

Referring back to Fig. 2, at 230, contributions of various parameters in the test data to the predictive road noise data may be obtained (e.g., for development of the vehicle model) by analyzing the predictive road noise data with an SHAP explaining module. The SHAP (SHapley Additive exPlanations) explaining module, which is an interpretable method for model, is mainly used to calculate a marginal contribution of a feature to a model output. With the SHAP explaining module, the prediction result of the model can be explained, thus indicating the relative significance of each input parameter.

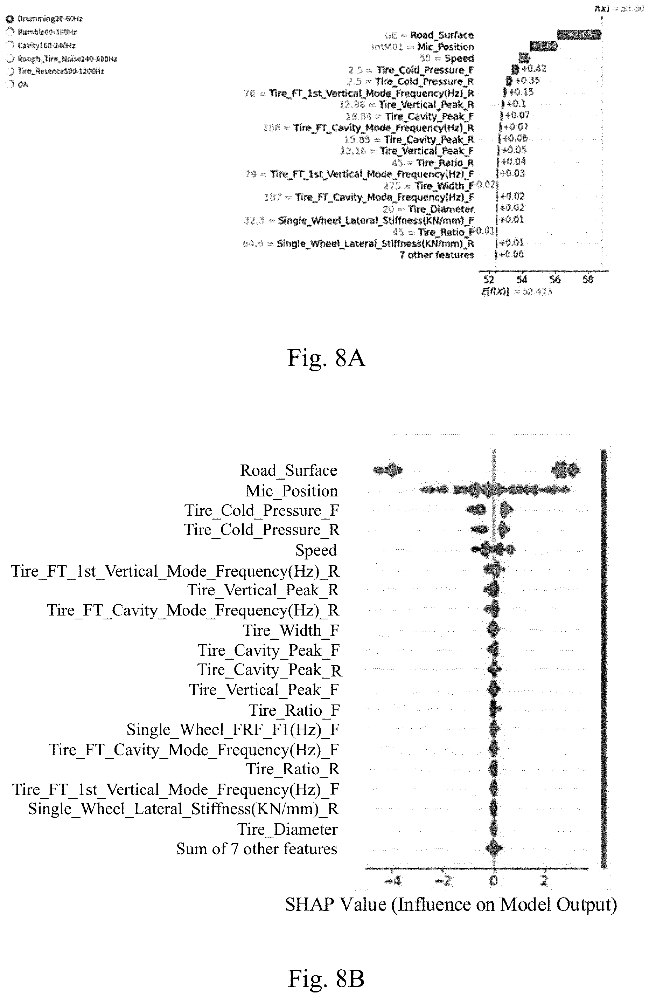

In an embodiment according to the present disclosure, the SHAP module may analyze respective parameters in the test data respectively with respect to the noise prediction results of different frequency bands. Referring to Fig. 8A, a schematic diagram of SHAP explanation for analyzing contributions of various parameters in test data to predictive road noise data according to an embodiment of the present disclosure is shown. As shown in Fig. 8A, for the predicted Drumming noise data of 20-60 Hz, the contributions of various parameters among the testing environment parameters, various parameters among the tire design parameters and various parameters among the vehicle attribute parameters to the predicted Drumming noise data are given respectively, including either positive contribution or negative contribution together with a range of contribution. In Fig. 8A, the vertical axis represents different vehicle attribute parameters, the horizontal axis represents the SHAP values of various vehicle attribute parameters, f(x) represents the predicted Drumming noise value of the selected Drumming noise of 20-60 Hz, and E[f(x)] represents the expectation of the noise prediction. For example, for the road surface parameter Road_Surface with a value as "GE", its SHAP contribution value is +2.65, indicating that this parameter has a relatively large positive contribution to the predictive road noise data. For example, for the front tire width parameter Tire_Ratio_F with a value as 275, its SHAP contribution value is -0.02, indicating that this parameter has a relatively small negative contribution to the predictive road noise data.

Fig. 8B shows a schematic diagram of SHAP explanation for analyzing contributions of various parameters in test data to predictive road noise data. Specifically, Fig. 8B shows a bee-swarm plot of data points which is composed of SHAP values of various parameters, with the vertical axis representing various parameters and the horizontal axis representing SHAP value, thus indicating the significances of various parameters to each prediction result. According to the schematic diagram, a parameter with a larger absolute SHAP value is more significant to the prediction result, being either on the left side or on the right side indicates whether the parameter has negative or positive influence on the prediction result. Although not shown in the figure, the result of SHAP explanation may further include the distribution of the relative magnitude of parameter in Fig. 8B. For example, for the two-part distribution of the parameter Tire_Cold_Pressure_F in Fig. 8B, the result of SHAP explanation indicates that the distribution on the left side corresponds to a higher parameter, and the distribution on the right side corresponds to a lower parameter, thus indicating that a higher value of Tire_Cold_Pressure_F has negative influence on the prediction result, whereas a lower value of Tire_Cold_Pressure_F has positive influence on the prediction result.

In an embodiment according to the present disclosure, the method 200 may further include adjusting test parameters of the vehicle model to be predicted based on the explanation result of the SHAP module. Adjusting the test parameters of the vehicle model to be predicted may include adjusting the values of the test parameters. As a non-limiting example, according to the SHAP explanation result of Fig. 8B, in order to obtain a better NVH noise prediction parameter, the value of the parameter Tire_Cold_Pressure_F may be lowered. Adjusting the test parameters of the vehicle model to be predicted may include adjusting the parameters to be taken by the prediction model. As a non-limiting example, for each parameter in Fig. 8A, it may be compared with a contribution threshold, and if the SHAP contribution value is lower than the threshold, the parameter is ignored in the process of adjusting the model. Based on the SHAP explanation, the engineers who are developing the vehicle model can learn the driving factors behind the predicted noise level, so as to adaptively adjust various parameters in real time for iterative development and optimize the vehicle design to the greatest extent before the actual physical test.

It should be understood that the steps included in the method 200 as shown in Fig. 2 are merely non-limiting examples, and the method 200 may include more steps not shown.

In an embodiment according to the present disclosure, in addition to the steps as shown in Fig. 2, the method for noise prediction of a vehicle model may further include obtaining data from a vehicle actually tested in history, a vehicle model to be predicted and their driving environments, and processing the data so as to obtain historical test data for training a noise prediction model and test data of a vehicle model to be predicted for prediction. Such processing may include feature engineering, such as described with respect to the historical test data feature engineering 510 in Fig. 5 and the feature engineering 610 in Fig. 6, and may also include data cleaning and normalization, etc., so as to ensure that the data is suitable for learning.

In an embodiment according to the present disclosure, in addition to the steps as shown in Fig. 2, the method for noise prediction of a vehicle model may further include retraining the trained noise prediction model based on the actual road noise data of the vehicle model to be predicted and the test data of the vehicle model to be predicted. The actual road noise data of the vehicle model to be predicted may refer to the road noise data obtained by carrying out an actual physical test on an actual vehicle of the vehicle model to be predicted. The test data of the vehicle model to be predicted may refer to the parameters input to the road noise prediction model for the purpose of road noise prediction of the vehicle model to be predicted. In this way, as time goes on, especially with the development of the development process, the method and apparatus in the present disclosure can be continuously updated according to the actual test data, thus improving the accuracy of prediction. It should be understood that the data available for model retraining is not limited to originate from the actual road noise data of the vehicle model to be predicted and the test data of the vehicle model to be predicted. Moreover, the model can be retrained at any time by utilizing a test of the actual road noise data and response of a similar vehicle.

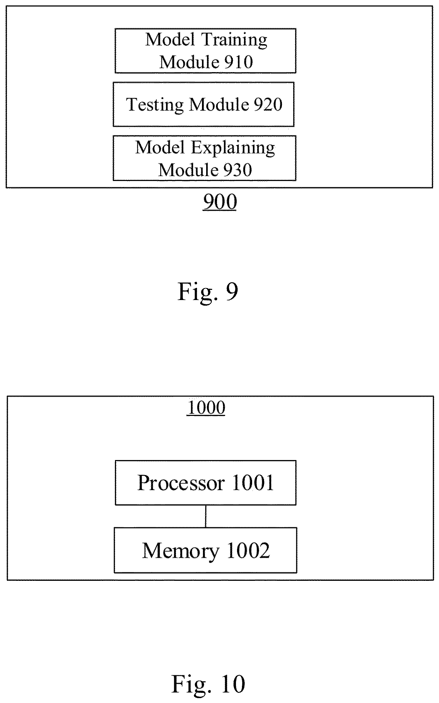

Fig. 9 shows a schematic diagram of an apparatus 900 for noise prediction of a vehicle model according to an embodiment of the present disclosure. As shown in Fig. 9, the apparatus 900 may include a model training module 910, a testing module 920 and a model explaining module 930. Specifically, the model training module 910 may be configured to train a noise prediction model based on historical data of the vehicle and corresponding historical road noise data. The testing module 920 may be configured to obtain predictive road noise data by inputting test data of the vehicle model to be predicted into the trained noise prediction model. The model explaining module 930 may be configured to obtain contributions of various parameters in the test data to the predictive road noise data (e.g., for development of the vehicle model) by analyzing the predictive road noise data with an SHAP explaining module. In addition to the modules as shown in Fig. 9, according to the embodiments of the present disclosure, the apparatus 900 may include additional modules, such as a feature engineering module for obtaining test data, a model retraining module for retraining a trained model, and the like.

Fig. 10 shows a schematic diagram of an apparatus 1000 for noise prediction of a vehicle model according to an embodiment of the present disclosure. As shown in Fig. 10, the apparatus 1000 may include a processor 1001 and a memory 1002.

The processor 1001 can be any device with processing capability that is capable of implementing the functions of various embodiments of the present disclosure. For example, it may be a general-purpose processor, a digital signal processor (DSP), an ASIC, a field programmable gate array signal (FPGA) or other programmable logic device (PLD), discrete gates or transistor logics, discrete hardware components or any combination thereof, that is/are designed to carry out the functions as described herein.

The memory 1002 may either include computer system readable media in the form of volatile memory, such as random access memory (RAM) and/or cache memory, or may include other removable/non-removable, volatile/non-volatile computer system memories, such as hard disk drive, floppy disk, CD-ROM, DVD-ROM or other optical storage media.

In this embodiment, the memory 1002 has stored computer program instructions therein, and the processor 1001 may execute the instructions stored in the memory 1002. When the computer program instructions are executed by the processor, the processor is caused to perform the method for noise prediction of a vehicle model according to the embodiments of the present disclosure. The method for noise prediction of a vehicle model is basically the same as that described above with reference to Figs. 1 to 6, which is therefore not detailed here in order to avoid repetition.

The method/device for noise prediction of a vehicle model according to the present disclosure can also be implemented by providing a computer program product containing program codes for implementing the method or device, or through any storage medium storing such a computer program product.

With the method and apparatus according to the present disclosure, the historical data and the results of the learning and actual testing thereof can be comprehensively utilized, so that the vehicle development process can be simplified by fully utilizing the data. The present disclosure not only provides the prediction of road noise, but also provides the ability to continuously improve the prediction model, which achieves real-time prediction of the constantly adaptively changing vehicle design under the condition of minimizing the physical tests, so that a more sensible design decision and a better NVH control can be realized with a low cost and a high efficiency in the process of developing a new vehicle model.

At the early developing stage for a new vehicle model, the method and apparatus of the present disclosure can be utilized to establish a mathematical linkage from the tires and hubs to the NVH performance of the whole vehicle, so that predictions and decisions can be made at the early stage without a simulation model and a physical prototype. Additionally, at the stage of engineering the new vehicle model after the early development stage, the method and apparatus of the present disclosure can reduce the frequency of necessary physical tests, thereby improving the development efficiency and reducing the development cost.

The basic principles of the present disclosure have been described above in conjunction with specific embodiments, but it should be noted that the benefits, advantages, effects, etc. as mentioned in the embodiments of the present disclosure are only examples rather than limitations, and such benefits, advantages, effects, etc. cannot be considered as essential to be possessed for various embodiments of the present disclosure. Additionally, the specific details as disclosed above are only for purpose of illustration and for easy of understanding, rather than limitation, and the above details do not limit the present disclosure to have to be implemented with the above specific details.

The block diagrams of the devices, equipment, apparatuses and systems involved in the embodiments of the present disclosure are only illustrative examples, and are not intended to require or imply that they must be connected, arranged or configured in the manner as shown in the block diagrams. As will be recognized by those skilled in the art, such devices, equipment, apparatuses and systems can be connected, arranged or configured in arbitrary manner. The words such as "including", "containing" and "having" are open terms, which indicate "including but not limited to" and can be used interchangeably therewith. The terms of "or" and "and" as used herein refer to the term of "and/or" and can be used interchangeably therewith, unless otherwise explicitly indicated in the context. The term of "such as" as used herein refers to the phrase of "such as but not limited to" and can be used interchangeably therewith.

Additionally, as used herein, the "or" as used in an enumeration of items starting with "at least one of" indicates a separate enumeration, so that, for example, an enumeration of "at least one of A, B or C" means A or B or C, or AB or AC or BC, or ABC (i.e., A and B and C). In addition, the wording of "exemplary" does not mean that the described example is preferred or better than other examples.

It should also be noted that in the devices and methods of the present disclosure, various components or steps can be decomposed and/or recombined. Such decomposition and/or recombination should be regarded as equivalent solutions of the present disclosure.

For ordinary operators in the art, it can be understood that all or any part of the methods and devices of the present disclosure can be implemented in hardware, firmware, software or a combination thereof in any computing device (including a processor, a storage medium, etc.) or network of computing devices. The said hardware can be a general-purpose processor, a digital signal processor (DSP), an ASIC, a field programmable gate array (FPGA) or other programmable logic device (PLD), discrete gate or transistor logic, discrete hardware assemblies, or any combination thereof designed to carry out the functions as described herein. The general-purpose processor can be a microprocessor, but in alternative, the processor can be any commercially available processor, controller, microcontroller or state machine. The processor can also be implemented as a combination of computing devices, e.g., a combination of a DSP and a microprocessor, a plurality of microprocessors, one or more microprocessors cooperating with a DSP core, or any other such configuration. The said software can exist in a computer-readable tangible storage media in any form. By way of example and not limitation, such computer-readable tangible storage media can include RAM, ROM, EEPROM, CD-ROM or other optical disc storage, magnetic disc storage or other magnetic storage device, or any other tangible media that can be used to carry or store desired program codes in the form of instructions or data structures and that can be accessed by a computer. As used herein, disc includes compact disc (CD), laser disc, optical disc, digital versatile disc (DVD), floppy disc and Blu-ray disc.

Various changes, substitutions and alternations to the techniques as described herein can be made without departing from the taught techniques as defined by the appended claims. In addition, the scope of the claims of the present disclosure is not limited to the specific aspects of the processing, machines, manufacturing, composition of events, means, methods and actions as described above. The processing, machines, manufacturing, composition of events, means, methods and actions that currently exist or are to be developed later can be utilized to perform basically the same functions or achieve basically the same results as the corresponding aspects described herein. As such, the appended claims include such processes, machines, manufacture, composition of events, means, methods or actions that are within the scope thereof.

The above description of the disclosed aspects is provided to enable any operator in the art to make or use the present disclosure. Various modifications to such aspects will be very obvious to those skilled in the art, and the general principles as defined herein can be applied to other aspects without departing from the scope of the present disclosure. Therefore, the present disclosure is not intended to be limited to the aspects as illustrated herein, but conforms to the widest scope consistent with the principles and novel features as disclosed herein.

The above description has been presented for purposes of illustration and description. In addition, this description is not intended to limit the embodiments of the present disclosure to the forms as disclosed herein. Although a plurality of example aspects and embodiments have been discussed above, those skilled in the art will recognize certain variations, modifications, changes, additions and subcombinations thereof.

## Claims

1. A computer-implemented method (200) for noise prediction of a vehicle model, comprising:
obtaining predictive road noise data by inputting test data of the vehicle model into a trained noise prediction model (220); and
obtaining contributions of various parameters in the test data to the predictive road noise data by analyzing the predictive road noise data with an SHAP explaining module (122).

2. The method according to claim 1, wherein:
the trained noise prediction model is trained based on historical test data of the vehicle and corresponding historical road noise data;
the historical test data includes at least one of historical testing environment parameters , historical tire design parameters, or historical vehicle attribute parameters; and
the test data includes at least one of testing environment parameters of the vehicle model to be predicted, tire design parameters of the vehicle model to be predicted, or vehicle attribute parameters of the vehicle model to be predicted.

3. The method according to claim 2, wherein the testing environment parameters (111) include parameters related to at least one of road surface condition, ambient temperature, ambient humidity, or vehicle speed.

4. The method according to claim 2, wherein the tire design parameters (112) include parameters related to at least one of pattern, material, size, or inflation pressure of the tire.

5. The method according to claim 2, wherein the vehicle attribute parameters (113) include parameters related to at least one of suspension system, chassis, or sound insulation.

6. The method according to any of the preceding claims 1 to 5, further comprising:
retraining the trained noise prediction model based on actual road noise data of the vehicle model and the test data of the vehicle model.

7. The method according to any of the preceding claims 1 to 6, further comprising adjusting the test data of the vehicle model based on an explanation result of the SHAP explaining module.

8. The method according to claim 7, wherein adjusting the test data of the vehicle model comprises at least one of:
adjusting the value of the test data of the vehicle model; or
adjusting the type of the test data to be taken by the trained noise prediction model.

9. An apparatus (1000) for noise prediction of a vehicle model, comprising:
a memory (1002), having stored computer instructions thereon; and
a processor (1001),
wherein the instructions, when executed by the processor, cause the processor to perform a method comprising steps of:
obtaining predictive road noise data by inputting test data of the vehicle model into a trained noise prediction model; and
obtaining contributions of various parameters in the test data to the predictive road noise data by analyzing the predictive road noise data with an SHAP explaining module.

10. The apparatus according to claim 9, wherein:
the trained noise prediction model is trained based on historical test data of the vehicle and corresponding historical road noise data;
the historical test data includes at least one of historical testing environment parameters , historical tire design parameters, or historical vehicle attribute parameters; and
the test data includes at least one of testing environment parameters of the vehicle model to be predicted, tire design parameters of the vehicle model to be predicted, or vehicle attribute parameters of the vehicle model to be predicted.

11. The apparatus according to claim 10, wherein the testing environment parameters (111) include parameters related to at least one of road surface condition, ambient temperature, ambient humidity, or vehicle speed.

12. The apparatus according to claim 10, wherein the tire design parameters (112) include parameters related to at least one of pattern, material, size, or inflation pressure of the tire.

13. The apparatus according to claim 10, wherein the vehicle attribute parameters (113) include parameters related to at least one of suspension system, chassis, or sound insulation.

14. The apparatus according to any of the preceding claims 9 to 13, wherein the instructions, when executed by the processor, cause the processor to further perform:
retraining the trained noise prediction model based on actual road noise data of the vehicle model and the test data of the vehicle model.

15. The apparatus according to any of the preceding claims 9 to 14, wherein the instructions, when executed by the processor, cause the processor to further perform:
adjusting the test data of the vehicle model based on an explanation result of the SHAP explaining module, wherein adjusting the test data of the vehicle model includes at least one:
adjusting the value of the test data of the vehicle model; or
adjusting the type of the test data to be taken by the trained noise prediction model.
